# DEMANDE DE BREVET EUROPEEN

(11) **EP 3 037 290 A1**
(43) Date de publication de la demande: **29.06.2016**
(21) Numéro de dépôt: 15202015.2
(22) Date de dépôt: 22.12.2015
(51) Int. Cl.: B60J 5/10

(54) **UN HAYON DE VÉHICULE AUTOMOBILE**

(30) Priorité: 26.12.2014 CN 201420848072 U
(71) Demandeur: COMPAGNIE PLASTIC OMNIUM, 69007 Lyon (FR)
(72) Inventeur: RAJON, Alexis, 69004 Lyon (FR)
(74) Mandataire: Remy, Vincent Noel Paul

(57) **Abrégé**

La présente invention propose un hayon de véhicule automobile qui comporte une peau extérieure et une doublure intérieure, caractérisé en ce qu'il comprend en outre une gorge entre la doublure intérieure et la peau extérieure, cette gorge formant un chemin de câble, pour le guidage d'un fil électrique ou d'un tuyau de passage de liquide à l'intérieur du hayon. La présence de ladite gorge fait que l'installation d'un fil électrique, d'un tuyau de passage de fluide ou de tout autre élément filiforme (en abrégé ci-dessous : l'élément introduit) est facilitée ; il suffit d'introduire l'élément par l'ouverture voulue, et il est possible de le pousser sans difficulté jusqu'à la position prédéterminée grâce au guidage de la gorge ; on n'a pas besoin de s'inquiéter du fait que l'élément introduit risque de rencontrer un obstacle, et il n'y a plus de risque de dommages ou de blessures causés à l'opérateur ou à l'élément introduit. Cela permet d'augmenter sensiblement la productivité, de réduire la charge de travail de l'opérateur et d'améliorer ses conditions de travail.

## Description

La présente invention relève du domaine des véhicules automobiles ; plus précisément, elle concerne un hayon de véhicule automobile.

Les hayons traditionnels de véhicules automobiles sont habituellement constitués d'une peau extérieure métallique et d'une doublure intérieure métallique soudées ensemble. La doublure intérieure métallique comporte habituellement plusieurs orifices qui sont au final recouverts par des éléments de garniture. Dans le hayon se trouvent habituellement des fils électriques destinés à alimenter en électricité divers équipements électriques (tels que : moteur d'essuie-vitre, serrure de hayon, bloc optique, etc.), ainsi que des tuyaux de passage de fluide en direction d'un dispositif à jet de fluide (tel qu'un gicleur de produit de nettoyage de vitre). Pour insérer les fils électriques ou les tuyaux de passage de fluide dans le hayon de véhicule automobile, un procédé connu consiste à connecter les fils électriques ou tuyaux de passage de fluide à l'une des extrémités d'une tête de guidage de forme ovoïde (connue en français sous le nom usuel de « souris »), en faisant en sorte que cette tête de guidage pénètre par un orifice spécifique pratiqué dans la doublure intérieure (habituellement dans le voisinage d'une charnière reliant le hayon et la caisse du véhicule automobile) ; cette tête de guidage descend sous l'effet de la gravité ; l'opérateur introduit la main dans les orifices de la doublure intérieure non encore recouverts par les éléments de garniture pour tirer sur l'autre extrémité de la tête de guidage, jusqu'à la position prévue. Cette opération est en général réalisée sur la chaîne d'assemblage du fabricant de véhicules automobiles.

Pour les hayons traditionnels susmentionnés, la méthode exposée ci-avant est acceptable. Cependant, elle présente les défauts suivants : lors du processus pendant lequel l'opérateur introduit les fils électriques ou les tuyaux de passage de fluide dans le hayon, étant donné que la main doit fréquemment être insérée dans les orifices pour tirer la tête de guidage, il existe un risque de coupure par les bords métalliques acérés ; par ailleurs, il est également possible que les fils électriques ou les tuyaux de passage de fluide soient coupés par les bords métalliques acérés, et soient donc impossibles à utiliser normalement.

Actuellement, dans le but de réduire la masse totale et la consommation d'énergie, on utilise de plus en plus pour les véhicules automobiles des pièces fabriquées en plastique (notamment en matériaux composites). Les hayons en plastique comprennent habituellement une peau extérieure en plastique et une doublure intérieure venue de matière avec des éléments décoratifs. Cela signifie que les orifices qui, dans la méthode avec tête de guidage exposée ci-dessus, pouvaient être mis à profit sont déjà recouverts par les éléments décoratifs, si bien que cette méthode ne peut plus être utilisée. Cela rend l'introduction des fils électriques ou des tuyaux de passage de fluide plus difficile. De plus, dans les hayons en plastique se trouvent toutes sortes de plaques intercalaires et de nervures qui bloquent souvent la tête de guidage et empêchent sa progression.

Un autre procédé connu consiste à installer au préalable, hors de la chaîne d'assemblage du fabricant de véhicules, les fils électriques ou les tuyaux de passage de fluide dans la doublure intérieure, puis à installer la peau extérieure sur la doublure. Étant donné que l'installation des fils électriques ou des tuyaux de passage de fluide se fait sur une structure ouverte, elle est plus facile. Cependant, on ne peut installer la peau extérieure qu'a posteriori. Ce procédé présente donc des limites importantes, et ne peut par exemple convenir que pour les peaux extérieures qui sont reliées à la doublure intérieure par filetage ; il ne convient pas aux chaînes d'assemblage OEM (fabricants d'équipement d'origine).

Le but de la présente invention est de fournir un nouveau hayon, permettant de garantir que l'opérateur puisse diriger plus facilement des fils électriques, des tuyaux de passage de fluide ou d'autres éléments filiformes dans des endroits prédéterminés d'un hayon déjà monté.

Pour cela, la présente invention propose un hayon de véhicule automobile comprenant une peau extérieure et une doublure intérieure, caractérisé en ce que ledit hayon comprend en outre une gorge entre la doublure intérieure et la peau extérieure, cette gorge formant un chemin de câble, pour le guidage d'un fil électrique ou d'un tuyau de passage de fluide à l'intérieur du hayon.

La présence de ladite gorge permet de faciliter l'installation des fils électriques, des tuyaux de passage de fluide ou d'autres éléments filiformes (désignés en abrégé ci-dessous par l'expression « éléments introduits ») ; il suffit de les introduire dans l'entrée correcte pour pouvoir les pousser et les placer facilement, sous le guidage de la gorge, dans la position prédéterminée ; il n'y a en outre pas besoin de s'inquiéter de la présence d'obstacles lors de l'introduction, et il n'existe plus de risque que l'opérateur ou les éléments introduits soient coupés. Cela permet d'améliorer sensiblement la productivité de l'opération, de réduire la charge de travail de l'opérateur et d'améliorer ses conditions de travail. Par ailleurs, l'installation des éléments introduits ne nécessite plus aucun outillage supplémentaire, comme une tête de guidage. En outre, le démontage des éléments introduits devient extrêmement facile : il suffit d'exercer une traction au niveau de leurs orifices d'introduction pour pouvoir les extraire. Le processus simple et réversible d'installation/ démontage facilite grandement le remplacement des éléments introduits et les opérations du distributeur.

Selon un mode d'exécution, ladite gorge est une pièce rapportée sur la peau extérieure et/ou la doublure intérieure.

Ladite pièce peut avoir une section transversale fermée. Dans ce cas, ladite pièce peut être obtenue par soufflage. Bien entendu, ladite pièce peut également présenter une section transversale non fermée. Dans ce cas, ladite pièce peut être obtenue par un procédé tel que moulage par injection.

Selon un autre mode de réalisation, ladite gorge est venue de matière avec la peau extérieure et/ou la doublure intérieure.

Avantageusement, ladite gorge est revêtue d'un matériau anti-bruit. Ainsi, lorsque des fils électriques, des tuyaux de passage de fluide ou d'autres éléments filiformes sont introduits dans la gorge, il est possible de réduire le niveau de bruit provoqué par le frottement.

Selon un mode de réalisation, ladite gorge est réalisée en polyoléfine. Ladite polyoléfine peut être tout matériau adapté, de préférence du PP non recyclé, du PP recyclé, du PEHD non recyclé et/ou du PEHD recyclé.

Dans les modes de réalisation de la présente invention, ladite gorge s'étend depuis le voisinage d'une charnière du hayon vers le voisinage d'un bloc optique, d'une serrure de hayon, d'un moteur de lave-vitre et/ou d'un gicleur de lave-vitre.

Dans un mode de réalisation de la présente invention, ladite peau extérieure et ladite doublure intérieure sont toutes deux réalisées en matière plastique. Cela permet d'alléger la masse globale du véhicule, de réduire la consommation d'essence et d'abaisser le coût.

Ci-dessous, des explications plus détaillées s'appuyant sur des figures sont données concernant la présente invention. L'homme du métier comprend facilement que ces figures ne sont données que dans un but explicatif, et n'ont en aucun cas pour objet de limiter la portée de protection de la présente invention. Des symboles identiques dans les dessins correspondent à des éléments identiques ou similaires. Pour les besoins de l'explication, ces figures ne sont pas entièrement dessinées à l'échelle.
La figure 1 est une vue schématique en perspective d'un hayon selon un mode de réalisation de la présent invention avant ajout d'un fil électrique.
La figure 2 est une vue schématique en perspective du hayon représenté à la figure 1 après ajout d'un fil électrique.
La figure 3 est une vue schématique en perspective de la gorge de guidage du hayon représenté à la figure 1.
La figure 4 est une vue schématique en section transversale d'un hayon selon un mode de réalisation de la présente invention.
La figure 5 est une vue schématique en section transversale d'un hayon selon un autre mode de réalisation de la présente invention.
La figure 6 est une vue schématique en section transversale d'un hayon selon encore un autre mode de réalisation de la présente invention.
La figure 7 est une vue schématique en section transversale d'un hayon selon encore un autre mode de réalisation de la présente invention.

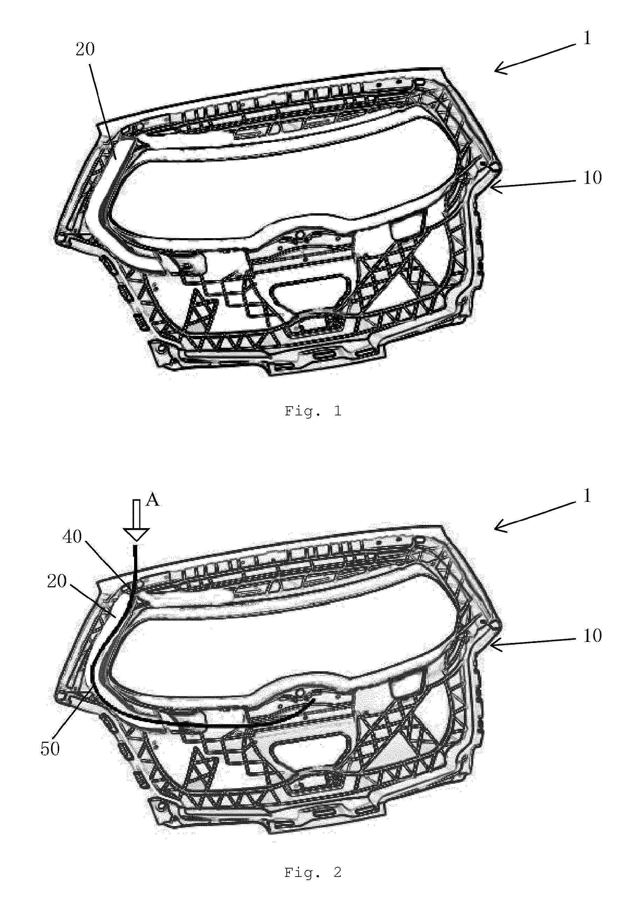

Les figures 1 et 2 représentent un hayon de véhicule automobile (1) selon un mode de réalisation de la présente invention. La figure 1 présente la situation du hayon (1) avant l'ajout d'un fil électrique (50), tandis que la figure 2 présente la situation après l'ajout d'un fil électrique (50). Le hayon (1) comprend une doublure intérieure (10) et une peau extérieure (dans les figures 1 et 2, la peau extérieure a été enlevée afin de pouvoir représenter de façon claire la gorge (20) située entre la doublure intérieure et la peau extérieure). Il faut comprendre que la peau extérieure est une pièce d'aspect du hayon, c'est-à-dire une pièce visible de l'extérieur par le consommateur, tandis que la doublure intérieure est une pièce structurelle qui joue un rôle de soutien. Dans le cas d'un hayon métallique, la doublure intérieure est habituellement constituée du panneau intérieur de hayon et d'éléments décoratifs rapportés au panneau intérieur de hayon ; dans le cas d'un hayon en plastique, la doublure intérieure est habituellement une pièce unique constituée du panneau intérieur de hayon venu de matière avec les éléments décoratifs.

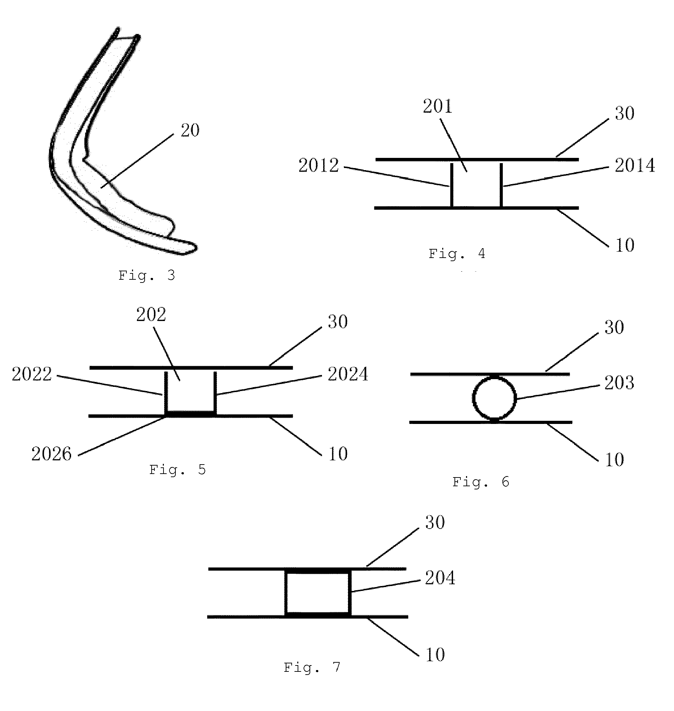

Comme le montrent les figures 1 et 2, le hayon (1) comprend encore une gorge (20) située entre la peau extérieure et la doublure intérieure (10) ; la gorge (20) forme un chemin de guidage qui amène le fil électrique (50) jusqu'à l'intérieur du hayon. Il faut comprendre qu'il est possible de mettre en place un chemin de guidage pour n'importe quel élément filiforme à insérer dans le hayon (p. ex. : tuyau de passage de liquide, faisceau de câbles, fils électriques). Dans le mode de réalisation illustré aux figures 1 et 2, la gorge (20) est constituée d'un élément rapporté à la doublure intérieure (10). La figure 3 représente cet élément non encore installé sur le hayon. On peut voir que cet élément est un objet tubulaire comportant une rainure dans le sens longitudinal ; son orientation longitudinale doit être sensiblement coïncide avec le cheminement des fils électriques à guider. Il faut comprendre que, sur au moins une portion du cheminement, et de préférence sur l'ensemble du cheminement des fils électriques (ou des autres éléments filiformes à guider), on met en place une gorge de guidage. En fonction de l'élément à guider, la dite gorge peut partir d'un endroit proche d'une charnière du hayon pour aboutir au voisinage d'un bloc optique, d'une serrure de hayon, d'un moteur d'essuie-vitre, d'un gicleur de liquide de nettoyage de vitre et/ou de tout autre dispositif nécessitant une alimentation en électricité ou en fluide.

Étant donné que la gorge (20) ne comporte pratiquement pas d'obstacle de nature à gêner l'avancée du fil électrique (ou de tout autre élément filiforme à guider), le fil électrique (ou tout autre élément filiforme à guider) introduit par l'entrée (40) (figure 2) peut être facilement amené dans la position prévue grâce au guidage de la gorge.

Les figures 4 à 7 représentent, sous la forme de vues schématiques en section transversale, quatre autres modes de réalisation de la gorge de la présente invention.

Dans le mode de réalisation de la figure 4, la gorge (201) se trouve entre la peau extérieure (30) et la doublure intérieure (10) ; elle est définie par deux parois latérales (2012 et 2014) venues de matière avec la doublure intérieure (10) et une portion (qui constitue le fond de cette gorge) de la doublure intérieure (10). On peut comprendre que les parois latérales (2012 et 2014) peuvent également être venues de matière avec la peau extérieure (30), ou bien une paroi latérale peut être venue de matière avec la doublure intérieure (10), et l'autre paroi latérale venue de matière avec la peau extérieure (30). Lorsque la peau extérieure (30) est installée sur la doublure intérieure (10), elles forment ensemble la gorge (201) complète. Cependant, pour une question d'esthétique de la peau extérieure (30), on prévoit de préférence les parois latérales (2012 et 2014) sur la doublure intérieure (10). Dans le mode de réalisation de la figure 5, la gorge (202) se trouve entre la peau extérieure (30) et la doublure intérieure (10), elle est constituée d'une pièce rapportée à la doublure intérieure (10) ; cette pièce est un élément tubulaire à section transversale en forme de U, elle comprend des parois latérales (2022 et 2024) et un fond (2026).

Dans le mode de réalisation de la figure 6, la gorge (203) se trouve entre la peau extérieure (30) et la doublure intérieure (10), elle est constituée d'une pièce rapportée à la doublure intérieure (10) ; cette pièce est un élément tubulaire à section transversale de forme ronde.

Dans le mode de réalisation de la figure 7, la gorge (204) se trouve entre la peau extérieure (30) et la doublure intérieure (10), elle est constituée d'une pièce rapportée à la doublure intérieure (10) ; cette pièce est un élément tubulaire à section transversale de forme rectangulaire.

Dans les modes de réalisation des figures 6 et 7, étant donné que la pièce qui constitue la gorge a une section transversale fermée, il est possible de réaliser cette pièce par soufflage. Bien entendu, on peut aussi utiliser tout autre procédé adapté.

Il faut comprendre que dans les modes de réalisation des figures 1 à 3 et des figures 5 à 7, les pièces qui constituent la gorge peuvent être rapportées à la doublure intérieure (10) par toute méthode adaptée, par exemple par soudage, collage ou clippage. Ces pièces peuvent être rapportées à la peau extérieure, ou bien être rapportées à la doublure intérieure et à la peau extérieure. Cependant, du fait que la peau extérieure est un composant d'aspect, elle présente des exigences assez élevées en matière d'apparence extérieure, aussi, afin d'éviter que le point de fixation n'ait une influence sur l'aspect extérieur de la peau extérieure, ces pièces sont de préférence rapportées à la doublure intérieure. Il faut encore comprendre que la section transversale de la gorge selon la présente invention ne se limite pas aux formes illustrées dans les figures, il peut s'agir de n'importe quelle forme favorable à l'élément filiforme guidé.

De préférence, on peut ajouter à l'intérieur de la gorge selon la présente invention un revêtement anti-bruit, comme du feutre. L'homme du métier peut choisir le matériau le mieux adapté selon le type d'élément à guider dans la gorge. Ainsi, lorsque l'on met à profit ladite gorge pour introduire des fils électriques, des tuyaux de passage de fluide ou d'autres éléments filiformes, on peut réduire les bruits provoqués par le frottement.

La gorge selon la présente invention peut être constituée de n'importe quel matériau adapté, par exemple de la polyoléfine. De préférence, cette gorge est réalisée en PP non recyclé, PP recyclé, PEHD non recyclé et/ou PEHD recyclé.

Dans un mode de réalisation préféré, la peau extérieure et la doublure intérieure du hayon sont réalisées en matière plastique (notamment du matériau composite renforcé ou non renforcé). Cela permet d'alléger la masse totale du véhicule, de réaliser des économies de carburant et de réduire le coût.

Les dessins et les explications qui précèdent décrivent des modes de réalisation non limitatifs de la présente invention. Pour enseigner les principes de l'invention, des points conventionnels ont été simplifiés ou omis. L'homme du métier doit pouvoir comprendre que les variantes dérivées de ces modes de réalisation entrent dans la portée de la présente invention. L'homme du métier doit pouvoir comprendre que les caractéristiques décrites ci-avant peuvent faire l'objet de toutes sortes de combinaisons de façon à constituer de nombreuses variantes de la présente invention. Dès lors, la présente invention n'est pas limitée aux modes de réalisation particuliers présentés ci-avant, mais n'est limité que par les revendications et les éléments équivalents qui en découlent.

## Revendications

1. Hayon de véhicule automobile comprenant une peau extérieure et une doublure intérieure **caractérisé en ce qu'**il comprend en outre une gorge entre la doublure intérieure et la peau extérieure, cette gorge formant un chemin de câble, pour le guidage d'un fil électrique ou d'un tuyau de passage de liquide à l'intérieur du hayon.

2. Hayon selon la revendication précédente, dans lequel la gorge est une pièce rapportée sur la peau extérieure et/ou la doublure intérieure.

3. Hayon selon la revendication 2, dans lequel la gorge présente une section transversale fermée.

4. Hayon selon la revendication 3, dans lequel la gorge est obtenue par soufflage.

5. Hayon selon la revendication 1, dans lequel la gorge est venue de matière avec la peau extérieure et/ou la doublure intérieure.

6. Hayon selon la revendication 1, dans lequel la gorge est revêtue d'un matériau anti-bruit.

7. Hayon selon la revendication 1, dans lequel la gorge est réalisée en polyoléfine.

8. Hayon selon la revendication 7, dans lequel la gorge est réalisée en PP non recyclé, PP recyclé, PEHD non recyclé et/ou PEHD recyclé.

9. Hayon selon la revendication 1, dans lequel la gorge s'étend depuis le voisinage d'une charnière du hayon vers le voisinage d'un bloc optique, une serrure, un moteur d'essuie-vitre et/ou un gicleur de lave-vitre.

10. Hayon selon l'une quelconque des revendications précédentes, dans lequel la peau extérieure et la doublure intérieure sont réalisées en matière plastique.
